# EUROPÄISCHE PATENTSCHRIFT

(11) **EP 1 028 310 B1**
(45) Veröffentlichungstag und Bekanntmachung des Hinweises auf die Patenterteilung: **16.10.2002**
(21) Anmeldenummer: 00102557.6
(22) Anmeldetag: 07.02.2000
(51) Int. Cl.: G01F 1/84

(54) **Massendurchflussmessgerät**
Mass flowmeter
Débitmètre massique

(30) Priorität: 12.02.1999 DE 19908072
(43) Veröffentlichungstag der Anmeldung: 16.08.2000
(73) Patentinhaber: Krohne AG, 4019 Basel (CH)
(72) Erfinder: Cook, Vincent, Earls Barton, Northants NN6 0NA (GB); Davies, Lawrence, Nor Corby, Northants NN18 8JJ (GB); Harrison, Neil, Duston, Northampton NN5 6SR (GB); Hussain, Yousif, Dr., Weston Favell, Northampton NN3 3DA (GB); Rolph, Chris, Sakey Lawn, Hartwell, Northampton (GB)
(74) Vertreter: Gesthuysen, von Rohr & Eggert

(56) Entgegenhaltungen:
- EP-A- 0 849 568
- DE-A- 19 710 806
- PATENT ABSTRACTS OF JAPAN vol. 1999, no. 10, 31. August 1999 (1999-08-31) & JP 11 125552 A (OVAL CORP), 11. Mai 1999 (1999-05-11)

## Beschreibung

Die Erfindung betrifft ein Massendurchflußmeßgerät, das nach dem Coriolis-Prinzip arbeitet, mit einem ein strömendes Medium führenden, im wesentlichen geraden Coriolis-Meßrohr, mit mindestens einem dem Coriolis-Meßrohr zugeordneten, das Coriolis-Meßrohr anregenden Schwingungserzeuger, mit mindestens einem dem Coriolis-Meßrohr zugeordneten, Coriolis-Kräfte und/oder auf Coriolis-Kräften beruhende Coriolis-Schwingungen erfassenden Meßwertaufnehmer und mit einem Kompensationszylinder, wobei das Coriolis-Meßrohr innerhalb des Kompensationszylinder angeordnet ist, der Kompensationszylinder an seinen beiden Enden mechanisch mit dem Coriolis-Meßrohr verbunden ist und als massenmäßige Ausgleichsmaßnahme für die Anregungs-Schwingung eine erste Ausgleichsmasse vorgesehen und in der senkrecht zur Längsachse stehenden Mittelebene des Kompensationszylinders mit diesem verbunden ist. Ein solches Massendurchflußmeßgerät ist z. B. aus der deutschen Offenlegungsschrift 197 10 806 bekannt.

Zuvor ist gesagt worden, daß zu dem in Rede stehenden Massendurchflußmeßgerät u. a. gehören mindestens ein dem Coriolis-Meßrohr "zugeordneter" Schwingungserzeuger und mindestens ein dem Coriolis-Meßrohr "zugeordneter" Meßwertaufnehmer. In der Regel sind der Schwingungserzeuger oder die Schwingungserzeuger, jedenfalls ein Teil des Schwingungserzeugers bzw. ein Teil der Schwingungserzeuger und der Meßwertaufnehmer bzw. die Meßwertaufnehmer, jedenfalls ein Teil des Meßwertaufnehmers bzw. ein Teil der Meßwertaufnehmer mit dem Coriolis-Meßrohr verbunden. Da das jedoch nicht zwingend ist, ist der Ausdruck "zugeordnet" - statt des Ausdruckes "verbunden" - verwendet worden.

Bei Massendurchflußmeßgeräten, die nach dem Coriolis-Prinzip arbeiten, unterscheidet man grundsätzlich zwischen einerseits solchen, deren Coriolis-Meßrohr zumindest im wesentlichen gerade ausgeführt ist, und andererseits solchen, deren Coriolis-Meßrohr schleifenförmig ausgeführt ist. Außerdem unterscheidet man bei den in Rede stehenden Massendurchflußmeßgeräten zwischen einerseits solchen, die nur ein Coriolis-Meßrohr aufweisen, und andererseits solchen, die zwei Coriolis-Meßrohre aufweisen; bei den Ausführungsformen mit zwei Coriolis-Meßrohren können diese strömungstechnisch in Reihe oder parallel zueinander liegen.

In jüngerer Zeit setzen sich zunehmend die Massendurchflußmeßgeräte mit nur einem im wesentlichen geraden Coriolis-Meßrohr durch. Nach dem Coriolis-Prinzip arbeitende Massendurchflußmeßgeräte, die nur ein gerades Coriolis-Meßrohr aufweisen, haben gegenüber solchen Massendurchflußmeßgeräten, die entweder zwei gerade Coriolis-Meßrohre oder ein schleifenförmiges Coriolis-Meßrohr aufweisen, erhebliche

Vorteile. Gegenüber Massendurchflußmeßgeräten mit zwei geraden Coriolis-Meßrohren ist der Vorteil vor allem darin zu sehen, daß Strömungsteiler bzw. Strömungszusammenführer, die bei Massendurchflußmeßgeräten mit zwei Coriolis-Meßrohren erforderlich sind, nicht benötigt werden. Gegenüber Massendurchflußmeßgeräten mit einem schleifenförmigen Coriolis-Meßrohr bzw. mit zwei schleifenförmigen Coriolis-Meßrohren ist der Vorteil vor allem darin zu sehen, daß ein gerades Coriolis-Meßrohr einfacher als ein schleifenförmiges Coriolis-Meßrohr hergestellt werden kann, daß der Druckabfall bei einem geraden Coriolis-Meßrohr geringer ist als bei einem schleifenformigen Coriolis-Meßrohr und daß ein gerades Coriolis-Meßrohr besser gereinigt werden kann als ein schleifenförmiges Coriolis-Meßrohr.

Massendurchflußmeßgeräte mit nur einem geraden Coriolis-Meßrohr sind trotz aller Vorteile unter einer Mehrzahl von Gesichtspunkten problematisch.

Zunächst treten aufgrund des gerade ausgeführten Coriolis-Meßrohres, durch thermisch verursachte Ausdehnungen bzw. Spannungen bedingt, Abhängigkeiten der Meßgenauigkeit von der Temperatur des strömenden Mediums auf. Im Extremfall können die thermisch bedingten Spannungen sogar zu mechanischen Schäden, nämlich zu Spannungsrissen, an dem Coriolis-Meßrohr führen.

Mit den zuvor aufgezeigten Problemen bei Massendurchflußmeßgeräten mit geraden Coriolis-Meßrohren hat sich die Fachwelt bereits befaßt (vgl. insbesondere die deutsche Patentschrift 41 24 295, die deutsche Offenlegungsschrift 41 43 361 und die deutsche Patentschrift 42 24 379). Diese Probleme sind dabei dadurch weitgehend gelöst worden, daß einerseits das Coriolis-Meßrohr und der Kompensationszylinder in einer axiale Relativbewegungen ausschließenden Weise miteinander verbunden sind, so daß der axiale Abstand der Verbindungsstellen Coriolis-Meßrohr / Kompensationszylinder die Schwingungslänge des Coriolis-Meßrohres darstellt, daß andererseits das Coriolis-Meßrohr mit Zug-Vorspannung innerhalb des Kompensationszylinder angeordnet ist (deutsche Patentschrift 41 24 295) und/oder daß das Coriolis-Meßrohr und der Kompensationszylinder aus Werkstoffen mit gleichen oder nahezu gleichen Wärmeausdehnungskoeffizienten bestehen (deutsche Offenlegungsschrift 41 43 361) und/oder daß ein Änderungen der Schwingungslänge des Coriolis-Meßrohres erfassender Längenänderungssensor - zur schwingungslängen- und spannungsabhängigen Korrektur des Meßwerts - vorgesehen ist (deutsche Patentschrift 42 24 379). Insgesamt ist es gelungen, ein nach dem Coriolis-Prinzip arbeitendes Massendurchflußmeßgerät mit einem geraden Coriolis-Meßrohr zu schaffen, das nur einen Meßfehler von etwa 0,1 % hat (vgl. den Prospekt "Zulassung des Corimass G-Gerätes zum eichpflichtigen Verkehr" der Firma KROHNE Meßtechnik GmbH & Co. KG).

Massendurchflußmeßgeräte, die nach dem Coriolis-Prinzip arbeiten und ein gerades Coriolis-Meßrohr haben, haben jedoch auch einen physikalisch vorgegebenen Nachteil (vgl. die europäische Offenlegungsschrift 0 521 439):

Nach dem Coriolis-Prinzip arbeitende Massendurchflußmeßgeräte erfordern, daß das Coriolis-Meßrohr bzw. die Coriolis-Meßrohre - mit Hilfe von mindestens einem Schwingungserzeuger - in Schwingungen versetzt werden; aus der Tatsache, daß das Coriolis-Meßrohr bzw. die Coriolis-Meßrohre schwingen, und aus dem Durchströmen von Masse durch das Coriolis-Meßrohr bzw. durch die Coriolis-Meßrohre resultieren ja die Coriolis-Kräfte bzw. die Coriolis-Schwingungen.

Bei Massendurchflußmeßgeräten mit zwei geraden Coriolis-Meßrohren bzw. mit einem schleifenförmigen Coriolis-Meßrohr oder mit zwei schleifenförmigen Coriolis-Meßrohren sind die Coriolis-Meßrohre bzw. die schwingungswirksamen Teile der schleifenförmigen Coriolis-Meßrohre identisch ausgeführt und so angeordnet und schwingungsmäßig erregt, daß sie gegeneinander schwingen. Das hat die positive Konsequenz, daß das schwingende System insgesamt nach außen nicht als solches wirksam wird. Die Lage des Massenmittelpunktes bleibt ortsfest und auftretende Kräfte werden kompensiert. Folglich werden in das Rohrleitungssystem, in das ein solches Massendurchflußmeßgerät eingebaut ist, keine Schwingungen eingeleitet und beeinflussen Schwingungen des Rohrleitungssystems das Meßergebnis nicht.

Bei nach dem Coriolis-Prinzip arbeitenden Massendurchflußmeßgeräten, die nur ein gerades Coriolis-Meßrohr aufweisen, ist die zuvor erläuterte positive Konsequenz von gegeneinander schwingenden Coriolis-Meßrohren natürlich nicht gegeben. Der Massenmittelpunkt bleibt nicht ortsfest, und auftretende Kräfte werden nicht kompensiert. Die Folge davon ist, daß einerseits Schwingungen in das Rohrleitungssystem, in das ein solches Massendurchflußmeßgerät eingebaut ist, übertragen werden, daß andererseits Schwingungen des Rohrleitungssystems das Meßergebnis beeinflussen können. Mit der Minimierung der Einkopplung äußerer Störungen, d. h. von Schwingungen im umgebenden Rohrleitungssystem, hat sich die Fachwelt bereits befaßt (vgl. die deutschen Offenlegungsschriften 44 23 168 und 196 32 500).

Um die zuvor erläuterte Problematik, die nach dem Coriolis-Prinzip arbeitenden Massendurchflußmeßgeräten mit nur einem geraden Coriolis-Meßrohr eigen ist, zu beherrschen, wird häufig das Rohrleitungssystem, in das ein solches Massendurchflußmeßgerät eingebaut ist, zusätzlich eingespannt. In der Regel wird dabei das das strömende Medium zum Massendurchflußmeßgerät führende Rohr und das das strömende Medium vom Massendurchflußmeßgerät wegführende Rohr in einem Abstand, der dem zehn- bis fünfzehnfachen Rohrdurchmesser entspricht, eingespannt.

In Verbindung mit der zuvor erläuterten Problematik, die nach dem Coriolis-Prinzip arbeitenden Massendurchflußmeßgeräten mit nur einem geraden Coriolis-Meßrohr eigen ist, ist auch bereits vorgeschlagen worden, dort, wo das Coriolis-Meßrohr eingespannt ist, sogenannte Antiresonatoren vorzusehen, die ein auf wenigstens eine Eigenschwingung des Coriolis-Meßrohres abgestimmtes Resonanzspektrum vorgegebener Bandbreite haben sollen (vgl. die europäische Offenlegungsschrift 0 521 439). Es hat sich jedoch gezeigt, daß eine solche Maßnahme bei ohnehin schon sehr genau arbeitenden Massendurchflußmeßgeräten nicht mehr zu einer Verbesserung der Meßgenauigkeit bzw. zu einer Reduzierung des Meßfehlers führt.

Weiterhin ist es insbesondere bei einem Massendurchflußmeßgerät mit nur einem geraden Coriolis-Meßrohr bekannt, ein zum Mittelpunkt des Coriolis-Meßrohres symmetrisch angeordnetes und symmetrisch ausgeführtes Ausgleichssystem auf dem Kompensationszylinder anzuordnen (deutsche Offenlegungsschrift 197 10 806). Dieses Ausgleichssystem ist dabei so auszulegen, daß die Schwingungsamplitude des Kompensationszylinders sehr klein ist, vorzugsweise gegen Null geht.

Ferner ist es aus dem Abstract zur japanischen Offenlegungsschrift 11125552 bekannt, . daß auf dem Coriolis-Meßrohr als Ausgleichsmaßnahme für die Schwingungen des Coriolis-Meßrohrs ein Gegenschwinger vorgesehen ist. Dieser ist rohrförmig ausgebildet und mittig am Coriolis-Meßrohr angebracht, so daß ein zu den Endseiten des Coriolis-Meßrohrs hin offenes und mittig geschlossenes Rohr gebildet wird. Der Gegenschwinger ist elastisch und weist an seinen beiden Endbereichen zwei einander entsprechende Ausgleichsgewichte auf.

Außerdem ist aus der europäischen Offenlegungsschrift 0 849 568 ein Massendurchflußmeßgerät mit einem geraden Coriolis-Meßrohr bekannt, daß von einem Kompensationszylinder eingeschlossen ist. Der Kompensationszylinder ist an seinen beiden Enden fest mit dem Coriolis-Meßrohr verbunden. Als Ausgleichsmaßnahmen sind eine mittig am Coriolis-Meßrohr angebrachte Auslegermasse angebracht, und der Kompensationszylinder weist an seinen beiden Endbereichen Teilbereiche auf, die dicker sind als die ansonsten einheitliche Wandstärke des Kompensationszylinders.

Schließlich ist für ein Massendurchflußmeßgerät mit nur einem geraden Coriolis-Meßrohr in jüngerer Zeit vorgeschlagen worden, dafür Sorge zu tragen, daß sowohl die Anregungs-Schwingung als auch die Coriolis-Schwingung des Coriolis-Meßrohres innerhalb des Kompensationszylinders ausgeglichen sind (vgl. die deutsche Offenlegungsschrift 198 40 782). Mit "ausgeglichen" ist dabei gemeint, daß weder die Anregungs-Schwingung noch die Coriolis-Schwingung den Kompensationszylinder beeinflußt. Der Kompensationszylinder wird also weder durch die Anregungs-Schwingung noch durch die Coriolis-Schwingung zu einer "Kompensationszylinder-Schwingung" angeregt; der Kompensationszylinder bleibt unbeeinflußt, also "ruhig". Es ist also erkannt worden, daß eine weitere Verbesserung eines nach dem Coriolis-Prinzip arbeitenden Massendurchflußmeßgerätes mit nur einem im we- sentlichen geraden Coriolis-Meßrohr dadurch erreichbar ist, daß der Massenmittelpunkt der Gesamtheit aller innerhalb des Kompensationszylinders vorgesehenen Bauteile ortsfest bleibt, also der Massenmittelpunkt der aus dem Coriolis-Meßrohr, dem Schwingungserzeuger oder den Schwingungserzeugern und dem Meßwertaufnehmer oder den Meßwertaufnehmern bestehenden Gesamtheit ortsfest bleibt. Befinden sich innerhalb des Kompensationszylinders weitere Bauteile, so müssen diese Bauteile natürlich in die Konzeption "Ortsfester Massenmittelpunkt" einbezogen werden.

Der Erfindung liegt nun die Aufgabe zugrunde, Ausgleichsmaßnahmen anzugeben, die eine weitere Verbesserung des Ausgleichs der Anregungs-Schwingung ermöglichen.

Das erfindungsgemäße Massendurchflußmeßgerät, bei dem die zuvor hergeleitete und aufgezeigte Aufgabe gelöst ist, ist nun dadurch gekennzeichnet, daß als massenmäßige Ausgleichsmaßnahme für die Coriolis-Schwingung eine zweite Ausgleichsmasse und eine dritte Ausgleichsmasse vorgesehen sind und die zweite Ausgleichsmasse und die dritte Ausgleichsmasse als endseitige Bereiche des Kompensationszylinders ausgebildet sind, so daß das aus dem Coriolis-Meßrohr und dem Kompensationszylinder bestehende schwingungsfähige System sowohl für die Anregungs-Schwingung des Coriolis-Meßrohrs als auch für die Coriolis-Schwingung des Coriolis-Meßrohrs massenmäßig zumindest weitgehend ausgeglichen ist.

Bei Massendurchflußmeßgeräten der in Rede stehenden Art sind einerseits das Coriolis-Meßrohr und die dem Coriolis-Meßrohr zugeordneten Teile des Schwingungserzeugers bzw. der Schwingungserzeuger und des Meßwertaufnehmers bzw. der Meßwertaufnehmer sowie andererseits der Kompensationszylinder und die dem Kompensationszylinder gegebenenfalls zugeordneten Teile des Schwingungserzeugers bzw. der Schwingungserzeuger und des Meßwertaufnehmers bzw. der Meßwertaufnehmer für sich schwingungsfähige Systeme. Ein schwingungsfähiges System ist aber auch die Baueinheit aus dem Coriolis-Meßrohr, dem Schwingungserzeuger bzw. den Schwingungserzeugern, dem Meßwertaufnehmer bzw. den Meßwertaufnehmern und dem Kompensationszylinder. Erfindungsgemäß soll also diese Baueinheit sowohl für die Anregungs-Schwingung des Coriolis-Meßrohres als auch für die Coriolis-Schwingung des Coriolis-Meßrohres massenmäßig zumindest weitgehend, idealerweise vollständig, ausgeglichen sein. Mit "ausgeglichen" ist dabei gemeint, daß sich weder die Anregungs-Schwingung noch die Coriolis-Schwingung außerhalb dieser Baueinheit "auswirkt". Erfindungsgemäß ist also erkannt worden, daß eine weitere Verbesserung eines nach dem Coriolis-Prinzip arbeitenden Massendurchflußmeßgerätes mit nur einem im wesentlichen geraden Coriolis-Meßrohr dadurch erreichbar ist, daß der Massenmittelpunkt der zuvor erläuterten Baueinheit ortsfest bleibt.

Gemäß einer bevorzugten Ausführungsform ist vorgesehen, die erste Ausgleichsmasse so zu wählen, zu dimensionieren und anzuordnen, daß die Resonanzfrequenz von Kompensationszylinder und erster Ausgleichsmasse im Anregungsmode geringer ist, vorzugsweise wesentlich geringer ist, als die Resonanzfrequenz des Coriolis-Meßrohres im Anregungsmode.

Besondere Bedeutung kommt einer bevorzugten Ausführungsform des erfindungsgemäßen Massendurchflußmeßgerätes zu, die dadurch gekennzeichnet ist, daß die erste Ausgleichsmasse in bezug auf die Anregungs-Kraft steif, in bezug auf das aus der Coriolis-Kraft resultierende Coriolis-Moment jedoch weich mit dem Kompensationszylinder verbunden ist. Die Verbindung der ersten Ausgleichsmasse mit dem Kompensationszylinder soll also so ausgeführt sein, daß die Anregungs-Schwingung des Coriolis-Meßrohres auf die erste Ausgleichsmasse einwirkt, die Coriolis-Schwingung des Coriolis-Meßrohres jedoch nicht auf die erste Ausgleichsmasse einwirken kann.

Bisher ist das Massendurchflußmeßgerät, von dem die Erfindung ausgeht, und das erfindungsgemäße Massendurchflußmeßgerät immer nur in bezug auf die funktionswesentlichen Bauteile beschrieben worden. In der Regel gehört zu Massendurchflußmeßgeräten der in Rede stehenden Art jedoch zusätzlich noch ein äußeres Gehäuse. Dann ist das erfindungsgemäße Massendurchflußmeßgerät vorzugsweise ergänzend dadurch gekennzeichnet, daß die Baueinheit aus dem Coriolis-Meßrohr und dem Kompensationszylinder über die Enden des Coriolis-Meßrohres oder über besondere Anschlußrohre in dem Gehäuse gelagert und befestigt ist.

Gehört zu dem erfindungsgemäßen Massendurchflußmeßgerät, wie üblich, auch ein äußeres Gehäuse, dann ist auch die konstruktive bzw. geometrische Ausgestaltung des äußeren Gehäuses für eine Optimierung des erfindungsgemäßen Massendurchflußmeßgerätes von Bedeutung.

Bei dem erfindungsgemäßen Massendurchflußmeßgerät besteht das äußere Gehäuse, wie üblich, aus einem vorzugsweise kreiszylindrischen Gehäusemantel und aus zwei Gehäuseabschlußbauteilen. Dabei empfiehlt sich eine besondere Ausführungsform, die dadurch gekennzeichnet ist, daß jedes Gehäuseabschlußbauteil ein dem Gehäusemantel abgewandtes, zumindest etwa zylindrisches Endteil und einen dem Gehäusemantel zugewandten Verbindungsteil aufweist.

In bezug auf die Ausgestaltung des äußeren Gehäuses, und zwar der zu dem äußeren Gehäuse gehörenden Gehäuseabschlußbauteile, ist eine besonders bevorzugte Ausführungsform des erfindungsgemäßen Massendurchflußmeßgerätes dadurch gekennzeichnet, daß die zylindrischen Endteile der Gehäuseabschlußbauteile nur den funktionsnotwendigen Außendurchmesser haben und daß die Verbindungsteile der Gehäuseabschlußbauteile - im Längsschnitt - einen zumindest etwa parallelogrammförmigen Querschnitt aufweisen, wobei die größere Parallelogrammachse vom Endteil zum Gehäusemantel verläuft, und die Querschnittsfläche der Verbindungsteile wesentlich größer ist als die Querschnittsfläche der Endteile.

Im einzelnen gibt es nun eine Vielzahl von Möglichkeiten, das erfindungsgemäße Massendurchflußmeßgerät auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen
- Fig. 1: einen Längsschnitt durch ein bevorzugtes Ausführungsbeispiel eines erfindungsgemäßen Massendurchflußmeßgerätes,
- Fig. 2: einen Querschnitt durch das Massendurchflußmeßgerät nach Fig. 1, und zwar durch die Mittelebene M,
- Fig. 3: eine Skizze zur Erläuterung des in den Fig. 1 und 2 dargestellten Ausführungsbeispiels eines erfindungsgemäßen Massendurchflußmeßgerätes und
- Fig. 4: wiederum eine Skizze zur Erläuterung des in den Fig. 1 und 2 dargestellten Ausführungsbeispiels eines erfindungsgemäßen Massendurchflußmeßgerätes.

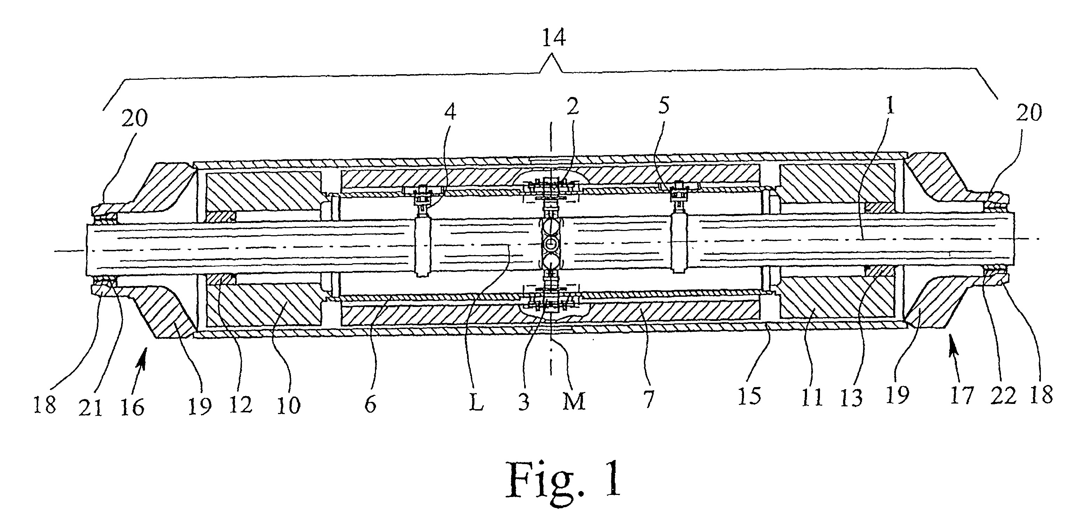

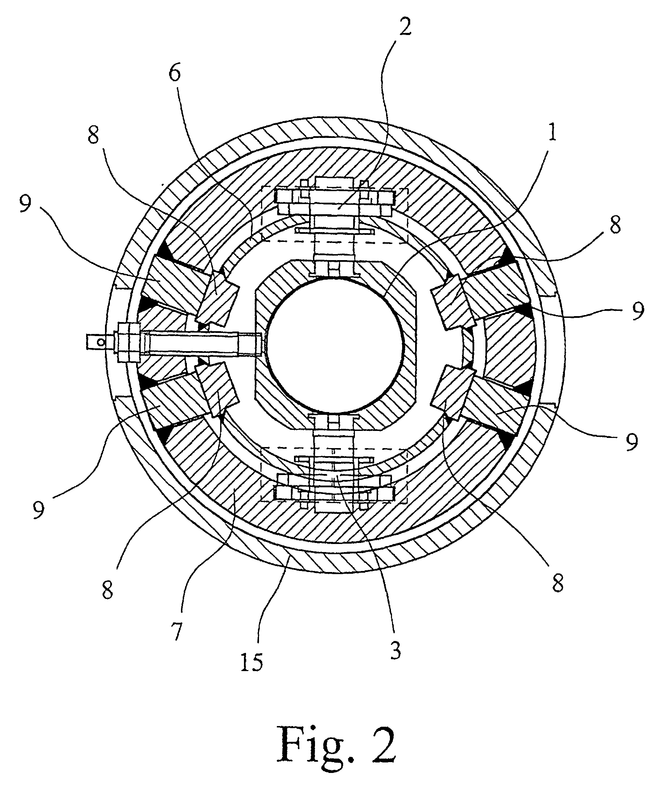

Die Fig. 1 und 2 zeigen ein Massendurchflußmeßgerät für strömende Medien, das nach dem Coriolis-Prinzip arbeitet, mit einem das strömende Medium führenden geraden Coriolis-Meßrohr 1, mit zwei auf das Coriolis-Meßrohr 1 einwirkenden Schwingungserzeugern 2, 3, mit zwei Coriolis-Kräfte und/oder auf Coriolis-Kräften beruhende Coriolis-Schwingungen erfassenden Meßwertaufnehmern 4, 5 und mit einem Kompensationszylinder 6. Das Coriolis-Meßrohr 1 ist innerhalb des Kompensationszylinders 6 angeordnet, und das Coriolis-Meßrohr 1 und der Kompensationszylinder 6 sind mechanisch miteinander verbunden.

Erfindungsgemäß ist nun dafür gesorgt, daß das aus dem Coriolis-Meßrohr 1 und dem Kompensationszylinder 6 bestehende schwingungsfähige System, eingeschlossen die Schwingungserzeuger 2, 3 und die Meßwertaufnehmer 4, 5, sowohl für die Anregungs-Schwingung des Coriolis-Meßrohres 1 als auch für die Coriolis-Schwingung des Coriolis-Meßrohres 1 massenmäßig zumindest weitgehend ausgeglichen ist, idealerweise vollständig ausgeglichen ist. Mit "ausgeglichen" ist dabei gemeint, daß sich weder die Anregungs-Schwingung noch die Coriolis-Schwingung außerhalb der das Coriolis-Meßrohr 1, die Schwingungserzeuger 2, 3, die Meßwertaufnehmer 4, 5 und den Kompensationszylinder 6 umfassenden Baueinheit "auswirkt". Anders ausgedrückt ist bei einem idealerweise anzustrebenden vollständigen massenmäßigen Ausgleich der Massenmittelpunkt der zuvor erläuterten Baueinheit ortsfest, so daß die eingangs erläuterten, normalerweise nach dem Coriolis-Prinzip arbeitenden Massendurchflußmeßgeräten mit nur einem geraden Coriolis-Meßrohr eigenen Probleme nicht auftreten.

In dem in den Fig. 1 und 2 dargestellten bevorzugten Ausführungsbeispiel eines erfindungsgemäßen Massendurchflußmeßgerätes ist der massenmäßige Ausgleich für die Anregungs-Schwingung des Coriolis-Meßrohres 1 durch eine erste Ausgleichsmaßnahme und der massenmäßige Ausgleich für die Coriolis-Schwingung des Coriolis-Meßrohres 1 durch eine zweite, von der ersten Ausgleichsmaßnahme verschiedene Ausgleichsmaßnahme realisiert. Wie das im einzelnen verwirklicht ist, wird im folgenden erläutert:

Wie die Fig. 1 und 2 zeigen, ist - als massenmäßige Ausgleichsmaßnahme für die Anregungs-Schwingung - eine erste Ausgleichsmasse 7 vorgesehen und in der - senkrecht zur Längsachse L stehenden - Mittelebene M des Kompensationszylinders 6 mit diesem verbunden. Die erste Ausgleichsmasse 7 ist so gewählt, dimensioniert und angeordnet, daß die Resonanzfrequenz von Kompensationszylinder 6 und erster Ausgleichsmasse 7 wesentlich geringer ist als die Resonanzfrequenz des Coriolis-Meßrohres 1.

Im dargestellten Ausführungsbeispiel ist die Wandstärke des Coriolis-Meßrohres 1 relativ gering. Sie kann beispielsweise bei einer bestimmten Größe des erfindungsgemäßen Massendurchflußmeßgerätes etwa 1 mm betragen. Wenn im folgenden Maßangaben gemacht werden, so gelten diese für ein erfindungsgemäßes Massendurchflußmeßgerät, bei dem die Wandstärke des Coriolis-Meßrohres etwa 1 mm beträgt.

Wie die Fig. 1 und 2 zeigen, ist im dargestellten Ausführungsbeispiel die erste Ausgleichsmasse 7 als konzentrisch zum Kompensationszylinder 6 angeordneter Ausgleichszylinder ausgeführt, der sich über einen wesentlichen Teil der Länge des Kompensationszylinders 6 erstreckt.

Für das dargestellte Ausführungsbeispiel eines erfindungsgemäßen Massendurchflußmeßgerätes kann gelten, daß die Wandstärke des Kompensationszylinders 6 größer ist als die Wandstärke des Coriolis-Meßrohres 1, vorzugsweise etwa 3 bis 5 mm, insbesondere etwa 4 mm beträgt, und daß die Wandstärke der als Ausgleichszylinder verwirklichten ersten Ausgleichsmasse 7 größer ist als die Wandstärke des Kompensationszylinders 6, vorzugsweise etwa das drei- bis zehnfache, insbesondere etwa das fünffache der Wandstärke des Kompensationszylinders 6 beträgt.

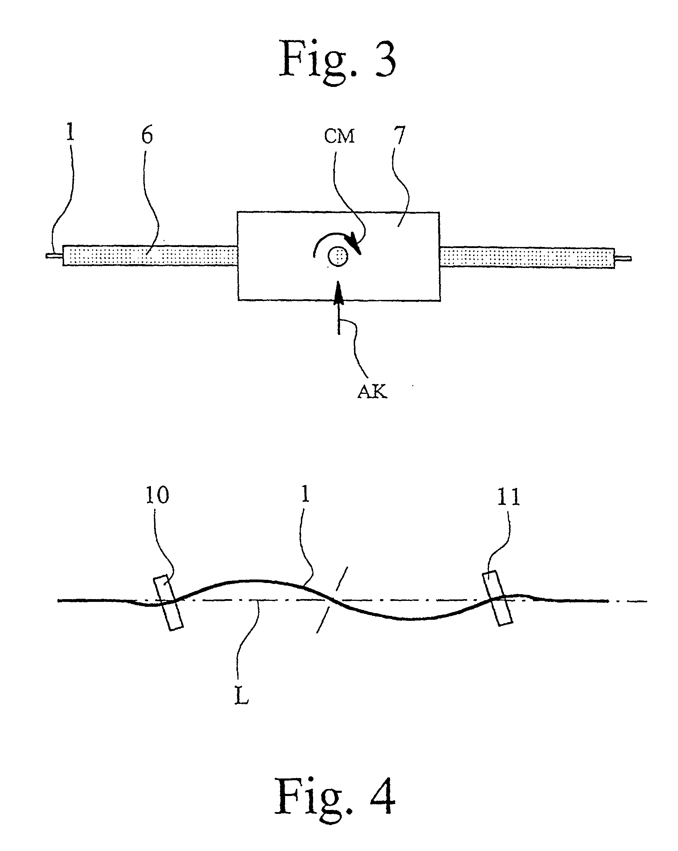

Bei dem in den Fig. 1 und 2 dargestellten Ausführungsbeispiel eines erfindungsgemäßen Massendurchflußmeßgerätes ist eine besondere Maßnahme mit erheblicher Bedeutung verwirklicht, die dadurch gekennzeichnet ist, daß die erste Ausgleichsmasse 7 in bezug auf die - in Fig. 3 skizzenhaft dargestellte - Anregungs-Kraft AK steif, in bezug auf das aus der Coriolis-Kraft resultierende - in Fig. 3 skizzenhaft dargestellte - Coriolis-Moment CM jedoch weich mit dem Kompensationszylinder 6 verbunden ist. Die Verbindung der ersten Ausgleichsmasse 7 mit dem Kompensationszylinder 6 ist also so ausgeführt, daß die Anregungs-Schwingung des Coriolis-Meßrohres 1 auf die erste Ausgleichsmasse 7 einwirkt, die Coriolis-Schwingung des Coriolis-Meßrohres 1 jedoch nicht, jedenfalls nicht wesentlich, auf die erste Ausgleichsmasse 7 einwirken kann.

Das, was zuvor in bezug auf die Verbindung der ersten Ausgleichsmasse 7 mit dem Kompensationszylinder 6 erläutert worden ist, ist im dargestellten Ausführungsbeispiel, wie Fig. 2 zeigt, dadurch realisiert, daß der Kompensationszylinder 6 vier Abstützköpfe 8 aufweist, daß die erste Ausgleichsmasse 7 mit vier Abstützbolzen 9 versehen ist und daß die Abstützbolzen 9 der ersten Ausgleichsmasse 7 so in die Abstützköpfe 8 des Kompensationszylinders 6 eingreifen, daß, wie erläutert, zwar Anregungs-Kräfte AK vom Kompensationszylinder 6 auf die erste Ausgleichsmasse 7 übertragen werden können, das in Fig. 3 skizzenhaft dargestellte Coriolis-Moment CM jedoch nicht von dem Kompensationszylinder 6 auf die erste Ausgleichsmasse 7 übertragen werden kann.

Die Verbindung der ersten Ausgleichsmasse mit dem Kompensationszylinder könnte auch z. B. über Blattfedern erfolgen, die in ihrer Hauptebene steif sind, senkrecht zu ihrer Hauptebene dagegen relativ weich sind. Denkbar ist ferner diese Verbindung mit Hilfe von dünnen Stäben, z. B. aus Titan, auszuführen.

Wie die Fig. 1 und 2 zeigen, sind bei dem dargestellten Ausführungsbeispiel eines erfindungsgemäßen Massendurchflußmeßgerätes - als massenmäßige Ausgleichsmaßnahme für die Coriolis-Schwingung - eine zweite Ausgleichsmasse 10 und eine dritte Ausgleichsmasse 11 vorhanden, wobei die zweite Ausgleichsmasse 10 und die dritte Ausgleichsmasse 11 als endseitige Bereiche des Kompensationszylinders 6 ausgebildet sind. Statt davon zu sprechen, daß die zweite Ausgleichsmasse 10 und die dritte Ausgleichsmasse 11 als endseitige Bereiche des Kompensationszylinders 6 ausgebildet sind, die zweite Ausgleichsmasse 10 und die dritte Ausgleichsmasse 11 also zum Kompensationszylinder 6 gehören, könnte man das dargestellte Ausführungsbeispiel auch dahingehend beschreiben, daß zusätzlich zum Kompensationszylinder 6 die zweite Ausgleichsmasse 10 und die dritte Ausgleichsmasse 11 vorhanden sind und die zweite Ausgleichsmasse 10 und die dritte Ausgleichsmasse 11 mit dem Kompensationszylinder 6 verbunden sind. Nachfolgend soll es jedoch bei der zuerst gewählten Betrachtungsweise bleiben.

Für das dargestellte Ausführungsbeispiel gilt nun weiter, daß die zweite Ausgleichsmasse 10 und die dritte Ausgleichsmasse 11 eine Wandstärke haben, die wesentlich größer ist als die Wandstärke des Kompensationszylinders 6 im übrigen, vorzugsweise das fünf- bis zehnfache, insbesondere etwa das siebenfache der Wandstärke des Kompensationszylinders 6 im übrigen beträgt. Außerdem gilt, daß die Länge der zweiten Ausgleichsmasse 10 und die Länge der dritten Ausgleichsmasse 11 jeweils etwa 5 bis 30 %, insbesondere etwa 17 bis 20 % der Länge des Kompensationszylinders 6 insgesamt, also die zweite Ausgleichsmasse 10 und die dritte Ausgleichsmasse 11 eingeschlossen, beträgt.

Zuvor ist mehrfach dargestellt worden, daß das Coriolis-Meßrohr 1, die Schwingungserzeuger 2, 3, die Meßwertaufnehmer 4, 5 und der Kompensationszylinder 6 eine Baueinheit darstellen. In dem in den Fig. 1 und 2 dargestellten Ausfiihrungsbeispiel ist dazu der Kompensationszylinder 6 am Ende der zweiten Ausgleichsmasse 10 und am Ende der dritten Ausgleichsmasse 11 jeweils über einen Verbindungsring 12, 13 mit dem Coriolis-Meßrohr 1 verbunden. Vorzugsweise sind die Verbindungsringe 12, 13 durch Hartlöten mit dem Coriolis-Meßrohr 1 verbunden und ist der Kompensationszylinder 6 am Ende der zweiten Ausgleichsmasse 10 und am Ende der dritten Ausgleichsmasse 11 durch Hartlöten oder durch Schrumpfen mit den Verbindungsringen 12, 13 verbunden. In bezug auf die Verbindung der Verbindungsringe 12, 13 mit dem Coriolis-Meßrohr 1 und in bezug auf die Verbindung der Enden der zweiten Ausgleichsmasse 10 und der dritten Ausgleichsmasse 11 mit den Verbindungsringen 12, 13 ist jedoch auch jede andere werkstoffgerechte Verbindungstechnik möglich.

Eingangs ist ausgeführt worden, daß bei Massendurchflußmeßgeräten der hier in Rede stehenden Art der Schwingungserzeuger bzw. die Schwingungserzeuger und der Meßwertaufnehmer bzw. die Meßwertaufnehmer dem Coriolis-Meßrohr zugeordnet sein müssen. Im dargestellten Ausführungsbeispiel sind nun sowohl die Schwingungserzeuger 2, 3 als auch die Meßwertaufnehmer 4, 5 zwischen dem Coriolis-Meßrohr 1 und dem Kompensationszylinder 6 vorgesehen. Im einzelnen ist jeweils, wie im Stand der Technik bekannt, ein Teil der Schwingungserzeuger 2, 3 und ein Teil der Meßwertaufnehmer 4, 5 mit dem Coriolis-Meßrohr und der jeweils andere Teil der Schwingungserzeuger 2, 3 und der Meßwertaufnehmer 4, 5 mit dem Kompensationszylinder 6 verbunden. Als Schwingungserzeuger 2, 3 und als Meßwertaufnehmer 4, 5 können im Stand der Technik bekannte Ausführungsformen verwendet werden, so daß hier weitere Erläuterungen insoweit nicht erforderlich sind. Die Schwingungserzeuger 2, 3 können sowohl direkt als auch indirekt auf das Coriolis-Meßrohr 1 einwirken.

In bezug auf die Realisierung der massenmäßigen Ausgleichsmaßnahme für die Coriolis-Schwingung kann man der Fig. 1 noch entnehmen, daß der Abstand zwischen jedem Meßwertaufnehmer 4, 5 und der Mittelebene M des Kompensationszylinders 6 unterschiedlich ist zu dem Abstand zwischen jedem Meßwertaufnehmer 4, 5 und dem jeweiligen Ende des Kompensationszylinders 6, also dem jeweiligen Ende der zweiten Ausgleichsmasse 10 und der dritten Ausgleichsmasse 11, ist.

Bisher ist das erfindungsgemäße Massendurchflußmeßgerät nur in bezug auf die funktionsnotwendigen Bauteile beschrieben worden. Zu dem erfindungsgemäßen Massendurchflußmeßgerät gehört jedoch auch noch ein äußeres Gehäuse 14. In diesem Gehäuse 14 ist die Baueinheit aus dem Coriolis-Meßrohr 1, den Schwingungserzeugem 2, 3, den Meßwertaufnehmern 4, 5 und dem Kompensationszylinder 6 gelagert und befestigt, und zwar im Ausführungsbeispiel über Endbereiche des Coriolis-Meßrohres 1, die beidseitig über den Kompensationszylinder 6, also über die zweite Ausgleichsmasse 10 und die dritte Ausgleichsmasse 11, überstehen.

Bei dem dargestellten Ausführungsbeispiel eines erfindungsgemäßen Massendurchflußmeßgerätes besteht das äußere Gehäuse 14, wie üblich, aus einem kreiszylindrischen Gehäusemantel 15 und aus zwei Gehäuseabschlußbauteilen 16, 17. Dabei weist jedes Gehäuseabflußbauteil 16 bzw. 17 ein dem Gehäusemantel 15 abgewandtes, etwa zylindrisches Endteil 18 und einen dem Gehäusemantel 15 zugewandten Verbindungsteil 19 auf.

Das dargestellte Ausführungsbeispiel eines erfindungsgemäßen Massendurchflußmeßgerätes ist in bezug auf das äußere Gehäuse 14, wie Fig. 1 zeigt, insoweit besonders gestaltet, als einerseits die zylindrischen Endteile 18 der Gehäuseabschlußbauteile 16, 17 nur den funktionsnotwendigen Außendurchmesser haben und mit einem Außengewinde 20 - zum Aufschrauben von hier nicht dargestellten Flanschen - versehen sind, als andererseits die Verbindungsteile 19 der Gehäuseabschlußbauteile 16, 17 - im Längsschnitt - einen etwa parallelogrammförmigen Querschnitt aufweisen, wobei die größere Parallelogrammachse zwischen dem Gehäusemantel 15 und dem zylindrischen Endteil 18 verläuft, und die Querschnittsfläche der Verbindungsteile 19 der Gehäuseabschlußbauteile 16, 17 wesentlich größer ist als die Querschnittsfläche der zylindrischen Endteile 18.

Wie im übrigen der Fig. 1 entnommen werden kann, sind im Ausführungsbeispiel die Enden des Coriolis-Meßrohres 1 jeweils über einen Verbindungsring 21, 22 an das Gehäuse 15 angeschlossen. Die Enden des Coriolis-Meßrohrs 1 können jedoch auch direkt an das Gehäuse angeschlossen sein.

Schließlich sei noch darauf hingewiesen, daß das erfindungsgemäße Massendurchflußmeßgerät im wesentlichen symmetrisch zur Mittelebene M, zuvor auch als Mittelebene M des Kompensationszylinders 6 behandelt, ausgeführt ist. Das gilt für alle Bauteile, insbesondere auch für die erfindungsgemäß realisierten Bauteile, also für die erste Ausgleichsmasse 7, für die zweite Ausgleichsmasse 10 und die dritte Ausgleichsmasse 11, und für die Gehäuseabschlußbauteile 16, 17.

In der Skizze gemäß Fig. 3 sind nur das Coriolis-Meßrohr 1, der Kompensationszylinder 6 und die erste Ausgleichsmasse 7 angedeutet. Außerdem sind die von den - in den Fig. 1 und 2 dargestellten - Schwingungserzeugern 2, 3 herrührende Anregungs-Kraft AK und das aus der Coriolis-Kraft resultierende Coriolis-Moment CM angedeutet. Die Skizze in Fig. 4 zeigt schematisch nur die Coriolis-Schwingung des Coriolis-Meßrohres 1. Tatsächlich ist die Coriolis-Schwingung des Coriolis-Meßrohres 1 natürlich der nicht dargestellten Anregungs-Schwingung des Coriolis-Meßrohres 1 überlagert. In Fig. 4 sind auch angedeutet die zweite Ausgleichsmasse 10 und die dritte Ausgleichsmasse 11. Man kann der Skizze in Fig. 4 entnehmen, daß für die Coriolis-Schwingung des Coriolis-Meßrohres 1 die zweite Ausgleichsmasse 10 und die dritte Ausgleichsmasse 11 dazu führen, daß durch die zweite Ausgleichsmasse 10 und durch die dritte Ausgleichsmasse 11 für die Coriolis-Schwingung des Coriolis-Meßrohres 1 ein massenmäßiger Ausgleich realisiert ist.

## Patentansprüche

1. Massendurchflußmeßgerät, das nach dem Coriolis-Prinzip arbeitet, mit einem ein strömendes Medium führenden, im wesentlichen geraden Coriolis-Meßrohr (1), mit mindestens einem dem Coriolis-Meßrohr (1) zugeordneten, das Coriolis-Meßrohr (1) anregenden Schwingungserzeuger (2, 3), mit mindestens einem dem Coriolis-Meßrohr (1) zugeordneten, Coriolis-Kräfte und/oder auf Coriolis-Kräften beruhende Coriolis-Schwingungen erfassenden Meßwertaufnehmer (4, 5) und mit einem Kompensationszylinder (6), wobei das Coriolis-Meßrohr (1) innerhalb des Kompensationszylinders (6) angeordnet ist, der Kompensationszylinder (6) an seinen beiden Enden mechanisch mit dem Coriolis-Meßrohr verbunden ist und als massenmäßige Ausgleichsmaßnahme für die Anregungs-Schwingung eine erste Ausgleichsmasse (7) vorgesehen und in der senkrecht zur Längsachse (L) stehenden Mittelebene (M) des Kompensationszylinders (6) mit diesem verbunden ist, **dadurch gekennzeichnet, daß** als massenmäßige Ausgleichsmaßnahme für die Coriolis-Schwingung eine zweite Ausgleichsmasse (10) und eine dritte Ausgleichsmasse (11) vorgesehen sind und die zweite Ausgleichsmasse (10) und die dritte Ausgleichsmasse (11) als endseitige Bereiche des Kompensationszylinders ausgebildet sind, so daß das aus dem Coriolis-Meßrohr (1) und dem Kompensationszylinder (6) bestehende schwingungsfähige System sowohl für die Anregungs-Schwingung des Coriolis-Meßrohrs (1) als auch für die Coriolis-Schwingung des Coriolis-Meßrohrs (1) massenmäßig zumindest weitgehend ausgeglichen ist.

2. Massendurchflußmeßgerät nach Anspruch 1, **dadurch gekennzeichnet, daß** die Resonanzfrequenz von Kompensationszylinder (6) und erster Ausgleichsmasse (7) wesentlich geringer ist als die Resonanzfrequenz des Coriolis-Meßrohres (1).

3. Massendurchflußmeßgerät nach Anspruch 1 oder 2, **dadurch gekennzeichnet, daß** die Wandstärke des Coriolis-Meßrohres (1) relativ gering ist, vorzugsweise nur etwa 1 mm beträgt.

4. Massendurchflußmeßgerät nach Anspruch 1 oder 3, **dadurch gekennzeichnet, daß** die erste Ausgleichsmasse (7) als konzentrisch zum Kompensationszylinder (6) angeordneter Ausgleichszylinder ausgeführt ist.

5. Massendurchflußmeßgerät nach Anspruch 4, **dadurch gekennzeichnet, daß** sich die als Ausgleichszylinder ausgeführte erste Ausgleichsmasse (7) über einen wesentlichen Teil der Länge des Kompensationszylinders (6) erstreckt.

6. Massendurchflußmeßgerät nach Anspruch 4 oder 5, **dadurch gekennzeichnet, daß** die Wandstärke des Kompensationszylinders (6) größer ist als die Wandstärke des Coriolis-Meßrohres (1), vorzugsweise etwa 3 bis 5 mm, insbesondere etwa 4 mm beträgt.

7. Massendurchflußmeßgerät nach einem der Ansprüche 4 bis 6, **dadurch gekennzeichnet, daß** die Wandstärke der als Ausgleichszylinder ausgeführten ersten Ausgleichsmasse (7) größer ist als die Wandstärke des Kompensationszylinders (6), vorzugsweise etwa das drei- bis zehnfache, insbesondere etwa das fünffache der Wandstärke des Kompensationszylinders (6) beträgt.

8. Massendurchflußmeßgeräte nach einem der Ansprüche 1 bis 7, **dadurch gekennzeichnet, daß** die erste Ausgleichsmasse in bezug auf die Anregungs-Kraft (AK) steif, in bezug auf das aus der Coriolis-Kraft resultierende Coriolis-Moment (CM) jedoch weich mit dem Kompensationszylinder (6) verbunden ist.

9. Massendurchflußmeßgerät nach einem der Ansprüche 1 bis 8, **dadurch gekennzeichnet, daß** die zweite Ausgleichsmasse (10) und die dritte Ausgleichsmasse (11) eine Wandstärke haben, die wesentlich größer ist als die Wandstärke des Kompensationszylinders (6) im übrigen, vorzugsweise etwa das fünf- bis zehnfache, insbesondere etwa das siebenfache der Wandstärke des Kompensationszylinders (6) im übrigen beträgt.

10. Massendurchflußmeßgerät nach einem der Ansprüche 1 bis 9, **dadurch gekennzeichnet, daß** die Länge der zweiten Ausgleichsmasse (10) und die Länge der dritten Ausgleichsmasse (11) jeweils etwa 15 bis 25 %, insbesondere etwa 17 bis 20 % der Länge des Kompensationszylinders insgesamt beträgt.

11. Massendurchflußmeßgerät nach einem der Ansprüche 1 bis 10, **dadurch gekennzeichnet, daß** der Kompensationszylinder (6) am Ende der zweiten Ausgleichsmasse (10) und am Ende der dritten Ausgleichsmasse (11) jeweils über einen Verbindungsring (12, 13) mit dem Coriolis-Meßrohr (1) verbunden ist.

12. Massendurchflußmeßgerät nach Anspruch 11, **dadurch gekennzeichnet, daß** die Verbindungsringe (12, 13) durch Hartlöten mit dem Coriolis-Meßrohr (1) verbunden sind.

13. Massendurchflußmeßgerät nach Anspruch 11 oder 12, **dadurch gekennzeichnet, daß** der Kompensationszylinder (6) am Ende der zweiten Ausgleichsmasse (10) und am Ende der dritten Ausgleichsmasse (11) durch Hartlöten oder durch Schrumpfen mit den Verbindungsringen (12, 13) verbunden ist.

14. Massendurchflußmeßgerät nach einem der Ansprüche 1 bis 13, **dadurch gekennzeichnet, daß** der Schwingungserzeuger bzw. die Schwingungserzeuger (2, 3) zwischen dem Coriolis-Meßrohr (1) und dem Kompensationszylinder (6) vorgesehen ist bzw. sind.

15. Massendurchflußmeßgerät nach einem der Ansprüche 1 bis 14, **dadurch gekennzeichnet, daß** der Meßwertaufnehmer bzw. die Meßwertaufnehmer (4, 5) zwischen dem Coriolis-Meßrohr (1) und dem Kompensationszylinder (6) vorgesehen ist bzw. sind.

16. Massendurchflußmeßgerät nach einem der Ansprüche 1 bis 15 mit zwei Meßwertaufnehmern (4, 5), **dadurch gekennzeichnet, daß** der Abstand zwischen jedem Meßwertaufnehmer (4, 5) und der Mittelebene (M) des Kompensationszylinders (6) unterschiedlich zu dem Abstand zwischen jedem Meßwertaufnehmer (4, 5) und dem jeweiligen Ende des Kompensationszylinders (6), also dem jeweiligen Ende der zweiten Ausgleichsmasse (10) und der dritten Ausgleichsmasse (13), ist.

17. Massendurchflußmeßgerät nach einem der Ansprüche 1 bis 16 mit einem äußeren Gehäuse (14), **dadurch gekennzeichnet, daß** die Baueinheit aus dem Coriolis-Meßrohr (1) und dem Kompensationszylinder (6) über die Enden des Coriolis-Meßrohres (1) oder über besondere Anschlußrohre in dem Gehäuse (14) gelagert und befestigt ist.

18. Massendurchflußmeßgerät nach Anspruch 17, **dadurch gekennzeichnet, daß** die Enden des Coriolis-Meßrohres (1) oder die besonderen Anschlußrohre jeweils über einen Verbindungsring (21, 22) an das Gehäuse (14) angeschlossen sind.

19. Massendurchflußmeßgerät nach einem der Ansprüche 1 bis 16 mit einem äußeren Gehäuse oder nach Anspruch 20 oder 21, **dadurch gekennzeichnet, daß** das Gehäuse (14) aus einem vorzugsweise kreiszylindrischen Gehäusemantel (15) und aus zwei Gehäuseabschlußbauteilen (16, 17) besteht.

20. Massendurchflußmeßgerät nach Anspruch 19, **dadurch gekennzeichnet, daß** jedes Gehäuseabschlußbauteil (16, 17) ein dem Gehäusemantel (15) abgewandtes, zumindest etwa zylindrisches Endteil (18) und ein dem Gehäusemantel (15) zugewandtes Verbindungsteil (19) aufweist.

21. Massendurchflußmeßgerät nach Anspruch 20, **dadurch gekennzeichnet, daß** die zylindrischen Endteile (18) der Gehäuseabschlußbauteile (16, 17) nur den funktionsnotwendigen Außendurchmesser haben.

22. Massendurchflußmeßgerät nach Anspruch 21, **dadurch gekennzeichnet, daß** die zylindrischen Endteile (18) der Gehäuseabschlußbauteile (16, 17) mit einem Außengewinde (20) versehen sind.

23. Massendurchflußmeßgerät nach einem der Ansprüche 20 bis 22, **dadurch gekennzeichnet, daß** die Verbindungsstelle (19) der Gehäuseabschlußbauteile (16, 17) - im Längsschnitt - einen zumindest etwa parallelogrammförmigen Querschnitt aufweisen, wobei die größere Parallelogrammachse zwischen dem Gehäusemantel (15) und dem Endteil (18) verläuft.

24. Massendurchflußmeßgerät nach Anspruch 23, **dadurch gekennzeichnet, daß** die Querschnittsfläche der Verbindungsteile (19) der Gehäuseabschlußbauteile (16, 17) wesentlich größer ist als die Querschnittsfläche der Endteile (18).

## Claims

1. Mass flowmeter operating by the Coriolis principle, incorporating one essentially straight, moving-fluid-conducting Coriolis measuring tube (1), at least one oscillator (2, 3) associated with the Coriolis measuring tube (1) and exciting the Coriolis measuring tube (1), at least one detector (4, 5) associated with the Coriolis measuring tube (1) and serving to measure Coriolis forces and/or Coriolis oscillations derived from Coriolis forces, and a compensating cylinder (6), wherein the Coriolis measuring tube (1) is positioned within the compensating cylinder (6) and the Coriolis measuring tube (1) and the compensating cylinder (6) are mechanically connected with each other and as a mass-equalization provision for the excitation oscillation, a first equalizing mass (7) is employed and is connected to the compensating cylinder (6) in the center plane (M), extending perpendicular to the longitudinal axis (L) of the compensating cylinder (6) **characterized in that** as a mass-equalization device for the Coriolis oscillation, a second equalizing mass (10) and a third equalizing mass (11) are provided and the second equalizing mass (10) and the third equalizing mass (11) are incorporated as end sections of the compensating cylinder (6) so that the oscillation-capable system consisting of the Coriolis measuring tube (1) and the compensating cylinder (6) is at least to a large extent mass-equalized for both the excitation oscillation of the Coriolis measuring tube (1) and the Coriolis oscillation of the Coriolis measuring tube (1).

2. Mass flowmeter according to claim 1, **characterized in that** the resonant frequency of the compensating cylinder (6) and the first equalizing mass (7) is substantially lower than the resonant frequency of the Coriolis measuring tube (1).

3. Mass flowmeter according to claim 1 or 2, **characterized in that** the wall of the Coriolis measuring tube (1) is relatively thin, its thickness preferably being only about 1 mm.

4. Mass flowmeter according to claim 1 or 3, **characterized in that** the first equalizing mass (7) is in the form of an equalizing cylinder that is concentric with the compensating cylinder (6).

5. Mass flowmeter according to claim 4, **characterized in that** the first equalizing mass (7) in the form of an equalizing cylinder extends over a significant portion of the length of the compensating cylinder (6).

6. Mass flowmeter according to claim 4 or 5, **characterized in that** the wall of the compensating cylinder (6) is thicker than the wall of the Coriolis measuring tube (1), preferably about 3 to 5 mm and more specifically about 4 mm.

7. Mass flowmeter according to any one of claims 4 to 6, **characterized in that** the wall of the equalizing cylinder constituting the first equalizing mass (7) is thicker than the wall of the compensating cylinder (6), preferably by a factor of three to ten and more specifically five times the wall thickness of the compensating cylinder (6).

8. Mass flowmeter according to any one of claims 1 to 7, **characterized in that** the first equalizing mass (7) is connected to the compensating cylinder (6) in rigid fashion relative to the excitation force (AK) but in soft fashion relative to the Coriolis moment (CM) resulting from the Coriolis force.

9. Mass flowmeter according to any one of claims 1 to 8, **characterized in that** the wall thickness of the second equalizing mass (10) and of the third equalizing mass (11) is substantially greater than the wall thickness of the basic compensating cylinder (6) preferably by a factor of five to ten, and more specifically seven times the wall thickness of the basic compensating cylinder (6).

10. Mass flowmeter according to any one of claims 1 to 9, **characterized in that** the length of the second equalizing mass (10) and the length of the third equalizing mass (11) each correspond to about 15 to 25%, and more specifically about 17 to 20%, of the overall length of the compensating cylinder.

11. Mass flowmeter according to any one of claims 1 to 10, **characterized in that**, at both the end of the second equalizing mass (10) and the end of the third equalizing mass (11), the compensating cylinder (6) is connected to the Coriolis measuring tube (1) by way of a connecting ring (12, 13).

12. Mass flowmeter according to claim 11, **characterized in that** the connecting rings (12, 13) are connected to the Coriolis measuring tube (1) by brazing.

13. Mass flowmeter according to claim 11 or 12, **characterized in that**, at the end of the second equalizing mass (10) and, respectively, at the end of the third equalizing mass (11), the compensating cylinder (6) is connected to the connecting rings (12, 13) by brazing or shrink fitting.

14. Mass flowmeter according to any one of claims 1 to 13, **characterized in that** the oscillator or oscillators (2, 3) is/are positioned between the Coriolis measuring tube (1) and the compensating cylinder (6).

15. Mass flowmeter according to any one of claims 1 to 14, **characterized in that** the detector or detectors (4, 5) is/are positioned between the Coriolis measuring tube (1) and the compensating cylinder (6).

16. Mass flowmeter according to any one of claims 1 to 15, **characterized in that** the distance between each of the detectors (4, 5) and the center plane (M) of the compensating cylinder (6) differs from the distance between each of the detectors (4, 5) and the respective end of the compensating cylinder (6), i.e. the respective end of the second equalizing mass (10) and the third equalizing mass (13).

17. Mass flowmeter according to any one of claims 1 to 16, with an external housing (14), **characterized in that** the assembly composed of the Coriolis measuring tube (1) and the compensating cylinder (6) is supported in and attached to the housing (14) via the ends of the Coriolis measuring tube (1) or by way of special connecting tubes.

18. Mass flowmeter according to claim 17, **characterized in that** each end of the Coriolis measuring tube (1) or of the special connecting tubes is connected to the housing (14) by way of a connecting ring (21, 22).

19. Mass flowmeter according to any one of claims 1 to 16, with an external housing or according to claim 20 or 21, **characterized in that** the housing (14) consists preferably of a circular-cylindrical casing (15) and two housing end caps (16, 17).

20. Mass flowmeter according to claim 19, **characterized in that** each housing end cap (16, 17) includes an at least essentially cylindrical end plate (18) facing away from the casing (15) and a connecting element (19) facing the casing (15).

21. Mass flowmeter according to claim 20, **characterized in that** the outer diameter of the cylindrical end plates (18) of the housing end caps (16, 17) is limited to the functionally necessary dimension.

22. Mass flowmeter according to claim 21, **characterized in that** the cylindrical end plates (18) of the housing end caps (16, 17) are provided with a male thread (20).

23. Mass flowmeter according to any one of claims 20 to 22, **characterized in that** in the longitudinal direction, the connecting elements (19) of the housing end caps (16, 17) have an at lest essentially parallelogram-shaped cross section, with the larger axis of the parallelogram extending between the casing (15) and the end plate (18).

24. Mass flowmeter according to claim 23, **characterized in that** the cross-sectional area of the connecting elements (19) of the housing end caps (16, 17) is substantially larger than the cross-sectional area of the end plates (18).

## Revendications

1. Appareil de mesure de débit de masse qui travaille selon le principe de Coriolis, équipé d'un tube de mesure de Coriolis (1) sensiblement droit et véhiculant un fluide circulant, d'au moins un vibrateur (2, 3) excitant le tube de mesure de Coriolis (1) et attribué au tube de mesure de Coriolis (1), d'au moins un capteur de mesure (4, 5) attribué au tube de mesure de Coriolis (1) et enregistrant des forces de Coriolis et/ou des vibrations de Coriolis basées sur des forces de Coriolis et d'un cylindre de compensation (6), moyennant quoi le tube de mesure de Coriolis (1) est disposé à l'intérieur du cylindre de compensation (6), le cylindre de compensation (6) est relié de façon mécanique au tube de mesure de Coriolis sur ses deux extrémités et une première mesure d'équilibrage (7) est prévue comme masse de compensation au niveau masse pour la vibration d'excitation et est reliée dans le plan médian (M), perpendiculaire à l'axe longitudinal (L), du cylindre de compensation (6) à ce cylindre, **caractérisé en ce qu'**une deuxième masse d'équilibrage (10) et une troisième masse d'équilibrage (11) sont prévues comme mesures de compensation pour la vibration d'excitation et la deuxième masse d'équilibrage (10) et la troisième d'équilibrage (11) sont conçues comme des zones côté extrémité du cylindre de compensation, de sorte que le système vibrant comprenant le tube de mesure de Coriolis (1) et le cylindre de compensation (6) est au moins largement équilibré au niveau masse aussi bien pour la vibration d'excitation du tube de mesure de Coriolis (1) que pour la vibration de Coriolis du tube de mesure de Coriolis (1).

2. Appareil de mesure de débit de masse selon la revendication 1, **caractérisé en ce que** la fréquence de résonance du cylindre de compensation (6) et de la première masse d'équilibrage (7) est sensiblement plus faible que la fréquence de résonance du tube de mesure de Coriolis (1).

3. Appareil de mesure de débit de masse selon la revendication 1 ou 2, **caractérisé en ce que** l'épaisseur de paroi du tube de mesure de Coriolis (1) est relativement faible, de préférence seulement d'environ 1 mm.

4. Appareil de mesure de débit de masse selon la revendication 1 ou 3, **caractérisé en ce que** la première masse d'équilibrage (7) est réalisée comme un cylindre de compensation disposé de façon concentrique par rapport au cylindre de compensation (6).

5. Appareil de mesure de débit de masse selon la revendication 4, **caractérisé en ce que** la première masse d'équilibrage (7) conçue comme cylindre de compensation s'étend sur une partie importante de la longueur du cylindre de compensation (6).

6. Appareil de mesure de débit de masse selon la revendication 4 ou 5, **caractérisé en ce que** l'épaisseur de paroi du cylindre de compensation (6) est supérieure à l'épaisseur de paroi du tube de mesure de Coriolis (1), de préférence d'environ 3 à 5 mm, en particulier d'environ 4 mm.

7. Appareil de mesure de débit de masse selon l'une quelconque des revendications 4 à 6, **caractérisé en ce que** l'épaisseur de paroi de la première masse d'équilibrage (7) conçue comme cylindre de compensation est supérieure à l'épaisseur de paroi du cylindre de compensation (6), représente de préférence trois à dix fois, en particulier à peu près cinq fois l'épaisseur de paroi du cylindre de compensation (6).

8. Appareil de mesure de débit de masse selon l'une quelconque des revendications 1 à 7, **caractérisé en ce que** la première masse d'équilibrage est reliée au cylindre de compensation (6) de façon rigide en ce qui concerne la force d'excitation (AK), mais de façon souple en ce qui concerne le couple de Coriolis (CM) résultant de la force de Coriolis.

9. Appareil de mesure de débit de masse selon l'une quelconque des revendications 1 à 8, **caractérisé en ce que** la deuxième masse d'équilibrage (10) et la troisième d'équilibrage (11) ont une épaisseur de paroi qui est nettement supérieure du reste à l'épaisseur de paroi du cylindre de compensation (6), représente du reste de préférence environ cinq à dix fois, en particulier environ sept fois l'épaisseur de paroi du cylindre de compensation (6).

10. Appareil de mesure de débit de masse selon l'une quelconque des revendications 1 à 9, **caractérisé en ce que** la longueur de la deuxième masse d'équilibrage (10) et la longueur de la troisième masse d'équilibrage (11) représentent globalement respectivement environ 15 à 25 %, en particulier environ 17 à 20 % de la longueur du cylindre de compensation.

11. Appareil de mesure de débit de masse selon l'une quelconque des revendications 1 à 10, **caractérisé en ce que** le cylindre de compensation (6) est relié au tube de mesure de Coriolis (1) au moyen d'une bague de liaison (12, 13) respectivement sur l'extrémité de la deuxième masse d'équilibrage (10) et sur l'extrémité de la troisième masse d'équilibrage (11).

12. Appareil de mesure de débit de masse selon la revendication 11, **caractérisé en ce que** les bagues de liaison (12, 13) sont reliées par brasage fort au tube de mesure de Coriolis (1).

13. Appareil de mesure de débit de masse selon la revendication 11 ou 12, **caractérisé en ce que** le cylindre de compensation (6) est relié aux bagues de liaison (12, 13) par brasage fort ou par frettage sur l'extrémité de la deuxième masse d'équilibrage (10) et sur l'extrémité de la troisième masse d'équilibrage (11).

14. Appareil de mesure de débit de masse selon l'une quelconque des revendications 11 à 13, **caractérisé en ce que** le vibrateur ou les vibrateurs (2, 3) est/sont prévu(s) entre le tube de mesure de Coriolis (1) et le cylindre de compensation (6).

15. Appareil de mesure de débit de masse selon l'une quelconque des revendications 1 à 14, **caractérisé en ce que** le capteur ou les capteurs de mesure (4, 5) est/sont prévu(s) entre le tube de mesure de Coriolis (1) et le cylindre de compensation (6).

16. Appareil de mesure de débit de masse selon l'une quelconque des revendications 1 à 15 avec deux capteurs de mesure (4, 5), **caractérisé en ce que** l'intervalle entre chaque capteur de mesure (4, 5) et le plan médian (M) du cylindre de compensation (6) est différent de l'intervalle entre chaque capteur de mesure (4, 5) et l'extrémité respective du cylindre de compensation (6), donc l'extrémité respective de la deuxième masse d'équilibrage (10) et de la troisième masse d'équilibrage (13).

17. Appareil de mesure de débit de masse selon l'une quelconque des revendications 1 à 16 avec un boîtier externe (14), **caractérisé en ce que** le module comprenant le tube de mesure de Coriolis (1) et le cylindre de compensation (6) est logé et fixé dans le boîtier (14) au moyen des extrémités du tube de mesure de Coriolis (1) et de tuyaux de raccordement particuliers.

18. Appareil de mesure de débit de masse selon la revendication 17, **caractérisé en ce que** les extrémités du tube de mesure de Coriolis (1) ou les tuyaux de raccordement particuliers sont raccordés respectivement par une bague de liaison (21, 22) au boîtier (14).

19. Appareil de mesure de débit de masse selon l'une quelconque des revendications 1 à 16 avec un boîtier externe ou selon la revendication 20 ou 21, **caractérisé en ce que** le boîtier (14) comprend une enveloppe de boîtier (15) de préférence cylindrique circulaire et deux composants de fermeture de boîtier (16, 17).

20. Appareil de mesure de débit de masse selon la revendication 19, **caractérisé en ce que** chaque composant de fermeture de boîtier (16, 17) présente une partie d'extrémité (18) au moins à peu près cylindrique et opposée à l'enveloppe de boîtier (15) et une partie de liaison (19) tournée vers l'enveloppe de boîtier (15).

21. Appareil de mesure de débit de masse selon la revendication 20, **caractérisé en ce que** les parties d'extrémité (18) cylindriques des composants de fermeture de boîtier (16, 17) ont seulement le diamètre extérieur nécessaire pour le fonctionnement

22. Appareil de mesure de débit de masse selon la revendication 21, **caractérisé en ce que** les parties d'extrémité (18) cylindriques des composants de fermeture de boîtier (16, 17) sont pourvues d'un filetage extérieur.

23. Appareil de mesure de débit de masse selon l'une quelconque des revendications 20à 22, **caractérisé en ce que** le point de liaison (19) des composants de fermeture de boîtier (16, 17) présente, vu en coupe longitudinale, une section transversale à peu près en forme de parallélogramme, l'axe plus grand du parallélogramme étant agencé entre l'enveloppe de boîtier (15) et la partie d'extrémité (18).

24. Appareil de mesure de débit de masse selon la revendication 23, **caractérisé en ce que** la surface de section des parties de liaison (19) des composants de fermeture de boîtier (16, 17) est nettement supérieure à la surface de section des parties d'extrémité (18).
